# EUROPEAN PATENT SPECIFICATION

(11) **EP 2 910 602 B1**
(45) Date of publication and mention of the grant of the patent: **19.07.2017**
(21) Application number: 14198384.1
(22) Date of filing: 16.12.2014
(51) Int. Cl.: C08L 7/00, C08L 9/00, B60C 17/00, B60C 1/00

(54) **Sidewall insert rubber composition for run-flat tire and tire produced using the composition**
Seitenwandeinsatzgummizusammensetzung für Notlaufreifen und daraus hergestellter Reifen
Composition de caoutchouc à insert de paroi latérale pour pneumatique à affaissement limité et pneu obtenu à l'aide de celle-ci

(30) Priority: 17.12.2013 KR 20130156851
(43) Date of publication of application: 26.08.2015
(73) Proprietor: Hankook Tire Co., Ltd., Seoul 135-723 (KR)
(72) Inventor: Choi, Ji Eun, 305-725 Daejeon (KR); Park, Sung Hee, 305-726 Daejeon (KR)
(74) Representative: Petraz, Gilberto Luigi

(56) References cited:
- EP-A1- 0 385 033
- EP-A2- 1 033 265
- WO-A1-2011/061598
- US-A1- 2004 198 890
- US-A1- 2012 296 027
- DATABASE WPI Week 200838 Thomson Scientific, London, GB; AN 2008-F99198 XP002742793, & KR 100 781 597 B1 (HANKOOK TIRE MFG CO LTD) 3 December 2007 (2007-12-03)
- ZEON: "General-purpose Rubber - Nipol (RTM) BR", , 2015, XP002742802, Retrieved from the Internet: URL:http://www.zeon.co.jp/business_e/enter prise/rubber/rubber_br.html [retrieved on 2015-07-28]

## Description

### BACKGROUND OF THE INVENTION

### 1. Field of the Invention

The present invention relates to a sidewall insert rubber composition for run-flat tire and a tire produced using the same, and more particularly, to a sidewall insert rubber composition for run-flat tire which has excellent processability in an unvulcanized state, and produces a run-flat tire having excellent resistance to heat generation, resistance to fatigue and resistance to cracking, and having excellent run-flat performance and excellent low fuel consumption performance, and to a tire produced using the same rubber composition.

### 2. Description of the Related Art

Conventional sidewall insert rubber for run-flat tire has been given improved resistance to fatigue and resistance to cracking by applying polybutadiene including syndiotactic 1,2-polybutadiene and butadiene rubber; however, this rubber generates foul odor and has poor workability because of the initiator and delaying agent that are generated at the time of butadiene production (Korean Unexamined Patent Application No. 2013-0075235 filed July 5, 2013).

Furthermore, polybutadiene including syndiotactic 1,2-polybutadiene and butadiene rubber have high heat generation and poor low fuel consumption performance. Also, these materials are mmonopolized raw materials supplied by particular manufacturers, and it is difficult to secure stable supply of the materials.

On the other hand, there is an increasing demand on the low fuel consumption performance of tires due to the recent restrictions on the vehicle carbon dioxide emissions and the European Tyre Labelling Regulations, and there is an increasing demand on the safety of tires.

### SUMMARY OF THE INVENTION

An object of the present invention is to provide a sidewall insert rubber composition for run-flat tires, which has excellent processability in an unvulcanized state, and produces a tire having excellent resistance to heat generation, resistance to fatigue and resistance to cracking, and having excellent run-flat performance and excellent low fuel consumption performance.

Another object of the present invention is to provide a tire produced using the sidewall insert rubber composition for run-flat tire described above.

In order to achieve the objects described above, a sidewall insert rubber composition for run-flat tire according to one aspect of the present invention includes 100 parts by weight of raw material rubber including 30 to 60 parts by weight of natural rubber and 40 to 70 parts by weight of butadiene rubber; 40 to 70 parts by weight of carbon black; 3 to 10 parts by weight of a novolac resin; and 0.2 to 2 parts by weight of a methylene donor.

The butadiene rubber may be a high-cis butadiene having a cis-1,4-butadiene content of 97% by weight or more and having a weight average molecular weight (Mw) of 7.0×10⁵ to 7.5×10⁵ g/mol.

The methylene donor may be hexamethylenetetramine.

The carbon black may have an iodine adsorption specific surface area of 20 to 50 g/kg, and an oil absorption number (OAN) of 85 to 120 cm³/100 g.

A tire according to another aspect of the present invention is a tire produced using the sidewall insert rubber composition for run-flat tire described above.

### DETAILED DESCRIPTION OF THE PREFERRED EMBODIMENTS

Hereinafter, the present invention will be described in more detail.

The sidewall insert rubber composition for run-flat tire according to an aspect of the present invention includes 100 parts by weight of raw material rubber including 30 to 60 parts by weight of natural rubber and 40 to 70 parts by weight of butadiene rubber; 40 to 70 parts by eight of carbon black; 3 to 10 parts by weight of a novolac resin; and 0.2 to 2 parts by weight of a methylene donor.

Regarding the natural rubber, any material known as natural rubber can be used, and there are no particular limitations on the place of production or the like. The natural rubber may include cis-1,4-polyisoprene as a main component.

The natural rubber may be included in an amount of 30 to 60 parts by weight in 100 parts by weight of the raw material rubber. When the content of the natural rubber is in the range described above, the durability performance of the sidewall insert rubber composition for run-flat tire can be maintained.

The butadiene rubber is preferably a high-cis butadiene. The high-cis butadiene is a material substituting the conventional polybutadiene including syndiotactic 1,2-polybutadiene. The polybutadiene including syndiotactic 1,2-polybutadiene is butadiene rubber having 10 to 20 parts by weight of syndiotactic 1,2-polybutadiene dispersed therein, and such polybutadiene has enhanced reinforcing properties such as hardness and tensile strength but has decreased heat generation performance, which is rolling resistance performance. However, the sidewall insert rubber composition for run-flat tire of the present invention has acquired enhanced low fuel consumption performance by using a butadiene rubber that has high linearity of the molecular chain, has a high cis-1,4 content, and has a narrow molecular weight distribution.

The high-cis butadiene rubber may have a content of cis-1,4-butadiene of 97% by weight or more, and a weight average molecular weight (Mw) of 7.0×10⁵ to 7.5×10⁵ g/mol. When the cis content of the butadiene rubber is 97% by weight or more, a higher cis content leads to a reduced hysteresis loss and increased green strength, and the fatigue resistance performance, the heat generation resistance performance, and the rubber strength are improved. Furthermore, when the weight average molecular weight of the butadiene rubber is 70×10⁵ to 7.5×10⁵ g/mol, the abrasion resistance can be enhanced without decreasing the processability of the rubber composition for tire tread.

The high-cis butadiene rubber may be included in an amount of 40 to 70 parts by weight in 100 parts by weight of the raw material rubber. If the content of the high-cis butadiene rubber is less than 40 parts by weight relative to 100 parts by weight of the raw material rubber, an abrasion resistance performance improving effect cannot be expected, and if the content is more than 70 parts by weight, the Mooney viscosity is increased, and processability is deteriorated.

Furthermore, the sidewall insert rubber composition for run-flat tire includes a reinforcing resin and a methylene donor so that a tire produced from this rubber composition has improved durability with high tensile modulus and tensile strength, and has excellent run-flat performance. That is, the sidewall insert rubber composition for run-flat tire includes a reinforcing resin and a methylene donor in order to secure hardness and rigidity of the rubber composition, so that a tire produced from the rubber composition can support the vehicle at the time of loss of the tire internal pressure (run-flat state), to run a certain distance at a certain speed.

The reinforcing resin may be a novolac resin, and the methylene donor may be hexamethylenetetramine. A rubber composition containing the novolac resin hardly affects mixing or processing at the time of processing; however, during vulcanization, the methoxy groups of hexamethylenetetramine are provided to the novolac resin and react with the hydroxyl groups (-OH) present in the novolac resin, and thus methylene bridges are produced between the molecules of the novolac resin. Thereby, a thermosetting resin network is formed, and the hardness and rigidity increasing effect can be further increased.

In order to obtain optimal rolling resistance performance in the present invention, it is appropriate to use the novolac resin in an amount of 3 to 10 parts by weight, and when the content is larger than this, hardness and rigidity may be increased, but the rolling resistance performance may be deteriorated.

Furthermore, it is appropriate to use the methylene donor in an amount of 0.2 to 2 parts by weight, and when the methylene donor is used at a larger content than this, tensile strength may be decreased, or scorching stability may be deteriorated.

The sidewall insert rubber composition for run-flat tire includes carbon black alone as a reinforcing filler. In order to obtain a sidewall insert rubber composition for run-flat tire suitable for the purpose of the present invention, it is preferable use a carbon black having characteristics such as an iodine adsorption specific surface area of 20 to 50 g/kg and an oil absorption number (OAN) of 85 to 120 cm³/100 g, in an amount of 40 to 70 parts by weight relative to 100 parts by weight of the raw material rubber. If the content of carbon black is larger than this, the rolling resistance performance may become poor, and if the content is smaller than this, hardness and rigidity may be decreased.

The sidewall insert rubber composition for run-flat tire may optionally further include various additives such as an additional vulcanizing agent, a vulcanization accelerator, a vulcanization accelerator aid, an anti-aging agent, and a softening agent. Regarding the various additives, any additives that are conventionally used in the art to which the present invention is pertained can be used, and the contents of these additives are not particularly limited as long as the mixing ratios used in conventional sidewall insert rubber compositions for run-flat tire are used.

For the vulcanizing agent, sulfur-based vulcanizing agents can be preferably used. Examples of the sulfur-based vulcanizing agents that can be used include inorganic vulcanizing agents such as powdered sulfur (S), insoluble sulfur (S), precipitated sulfur (S) and colloidal sulfur; and organic vulcanizing agents such as tetramethylthiuram disulfide (TMTD), tetraethylthiuram disulfide (TETD), and dithiodimorpholine. Regarding the sulfur-based vulcanizing agents, specifically elemental sulfur, or a vulcanizing agent capable of producing sulfur, for example, amine disulfide or polymeric sulfur, can be used.

It is preferable that the vulcanizing agent is included in an amount of 0.5 to 4.0 parts by weight relative to 100 parts by weight of the raw material rubber, from the viewpoint that the vulcanizing agent can make the raw material rubber less sensitive to heat and chemically stable by providing an appropriate vulcanizing effect.

The vulcanization accelerator means an accelerator that accelerates the rate of vulcanization, or accelerates the delaying action in the initial vulcanization stage.

Regarding the vulcanization accelerator, any one selected from the group consisting of sulfenamide-based agents, thiazole-based agents, thiuram-based agents, thiourea-based agents, guanidine-based agents, dithiocarbamic acid-based agents, aldehyde-amine-based agents, aldehyde-ammonia-based agents, imidazoline-based agents, xanthate-based agents, and combinations thereof can be used.

Regarding the sulfenamide-based vulcanization accelerator, for example, any one sulfenamide-based compound selected from the group consisting of N-cyclohexyl-2-benzothiazylsulfenamide (CBS), N-tert-butyl-2-benzothiazylsulfenamide (TBBS), N,N-dicyclohexyl-2-benzothiazylsulfenamide, N-oxydiethylene-2-benzothiazylsulfenamide, N,N-diisopropyl-2-benzothiazole sulfenamide, and combinations thereof can be used.

Regarding the thiazole-based vulcanization accelerator, for example, any one thiazole-based compound selected from the group consisting of 2-mercaptobenzothiazole (MBT), dibenzothiazyl disulfide (MBTS), 2-mercaptobenzothiazole sodium salt, 2-mercaptobenzothiazole zinc salt, 2-mercaptobenzothiazole copper salt, 2-mercaptobenzothiazole cyclohexylamine salt, 2-(2,4-dinitrophenyl)mercaptobenzothiazole, 2-(2,6-diethyl-4-morpholinothio)benzothiazole, and combinations thereof can be used.

Regarding the thiuram-based vulcanization accelerator, for example, any one thiuram-based compound selected from the group consisting of tetramethylthiuram disulfide (TMTD), tetraethylthiuram disulfide, tetramethylthiuram monosulfide, dipentamethylenethiuram disulfide, dipentamethylenethiuram monosulfide, dipentamethylenethiuram tetrasulfide, dipentamethylenethiuram hexasulfide, tetrabutylthiuram disulfide, pentamethylenethiuram tetrasulfide, and combinations thereof can be used.

Regarding the thiourea-based vulcanization accelerator, for example, any one thiourea-based compound selected from the group consisting of thiacarbamide, diethylthiourea, dibutylthiourea, trimethylthiourea, di-ortho-tolylthiourea, and combinations thereof can be used.

Regarding the guanidine-based vulcanization accelerator, for example, any one guanidine-based compound selected from the group consisting of diphenylguanidine, di-ortho-tolylguanidine, triphenylguanidine, ortho-tolylbiguanide, diphenylguanidine phthalate, and combinations thereof can be used.

Regarding the dithiocarbamic acid-based vulcanization accelerator, for example, any one dithiocarbamic acid-based compound selected from the group consisting of zinc ethylphenyldithiocarbamate, zinc butylphenyldithiocarbamate, sodium dimethyldithiocarbamate, zinc dimethyldithiocarbamate, zinc diethyldithiocarbamate, zinc dibutyldithiocarbamate, zinc diamyldithiocarbamate, zinc dipropyldithiocarbamate, a complex salt of zinc pentamethylenedithiocarbamate and piperidine, zinc hexadecylisopropyldithiocarbamate, zinc octadecylisopropyldithiocarbamate, zinc dibenzyldithiocarbamate, sodium diethyldithiocarbamate, piperidine pentamethylenedithiocarbamate, selenium dimethyldithiocarbamate, tellurium diethyldithiocarbamate, cadmium diamyldithiocarbamate, and combinations thereof can be used.

Regarding the aldehyde-amine-based or aldehyde-ammonia-based vulcanization accelerator, for example, any one aldehyde-amine-based or aldehyde-ammonia-based compound selected from the group consisting of acetaldehyde-aniline reaction product, butylaldehyde-aniline condensation product, hexamethylenetetramine, acetaldehyde-ammonia reaction product, and combinations thereof can be used.

Regarding the imidazoline-based vulcanization accelerator, for example, an imidazoline-based compound such as 2-mercaptoimidazoline can be used, and regarding the xanthate-based vulcanization accelerator, for example, a xanthate-based compound such as zinc dibutylxanthogenate can be used.

The vulcanization accelerator may be included in an amount of 0.5 to 4.0 parts by weight relative to 100 parts by weight of the raw material rubber, in order to maximize the increase of productivity through the acceleration of the rate of vulcanization, and the enhancement of rubber properties.

The vulcanization accelerator aid is a mixing agent used in combination with the vulcanization accelerator in order to perfect the acceleration effect. Any one selected from the group consisting of inorganic vulcanization accelerator aids, organic vulcanization accelerator aids, and combinations thereof can be used.

Regarding the inorganic vulcanization accelerator aid, any one selected from the group consisting of zinc oxide (ZnO), zinc carbonate, magnesium oxide (MgO), lead oxide, potassium hydroxide, and combinations thereof can be used. Regarding the organic vulcanization accelerator aid, any one selected from the group consisting of stearic acid, zinc stearate, palmitic acid, linoleic acid, oleic acid, lauric acid, dibutylammonium oleate, derivatives thereof, and combinations thereof can be used.

Particularly, zinc oxide and stearic acid can be used together as the vulcanization accelerator aid, and in this case, zinc oxide dissolves in stearic acid and forms an effect complex with the vulcanization accelerator. This produces free sulfur during the vulcanization reaction, and thereby facilitates the cross-linking reaction of rubber.

In the case of using zinc oxide and stearic acid together, the substances can be used in amounts of 1 to 5 parts by weight, and 0.5 to 3 parts by weight, respectively, relative to 100 parts by weight of the raw material rubber, in order to induce appropriate roles of the vulcanization accelerator aids. If the contents of zinc oxide and stearic acid are less than the ranges described above, the rate of vulcanization may be decreased, and productivity may be deteriorated. If the contents exceed the ranges described above, the scorching phenomenon may occur, and properties may be deteriorated.

The softening agent means a material that is added to the rubber composition in order to impart plasticity to rubber and facilitate processing thereof, or in order to decrease the hardness of vulcanized rubber. The softening agent may be any oily material that is used at the time of mixing rubber raw materials or at the time of rubber production. The softening agent means a process oil, or any other oil that is included in a rubber composition. Regarding the softening agent, any one selected from the group consisting of petroleum-based oils, plant oils and fats, and combinations thereof can be used; however, the present invention is not intended to be limited to these.

Regarding the petroleum-based oil, any one selected from the group consisting of paraffin-based oils, naphthene-based oils, aromatic oils, and combinations thereof can be used.

Representative examples of the paraffin-based oils include P-1, P-2, P-3, P-4, P-5, and P-6 manufactured by Michang Oil Industry Co., Ltd., and representative examples of the naphthene-based oils include N-1, N-2 and N-3 manufactured by Michang Oil Industry Co., Ltd. Representative examples of the aromatic oils include A-2 and A-3 manufactured by Michang Oil Industry Co., Ltd.

However, along with the recent rise of environmental awareness, since it is known that when the content of polycyclic aromatic hydrocarbons (hereinafter, referred to as PAHs) included in the aromatic oils is 3% by weight or more, the aromatic oils have a high potential of carcinogenesis, treated distillate aromatic extract (TDAE) oil, mild extract solvate (MES) oil, residual aromatic extract (RAE) oil, or heavy naphthenic oil can be preferably used.

Particularly, regarding the oil used as the softening agent, a TDAE oil having a total content of PAH components relative to the total amount of the oil of 35 by weight or less, a dynamic viscosity of 95 or more (210°F SUS), a content of aromatic components in the softening agent of 15% to 25% by weight, a content of naphthenic components of 27% to 37% by weight, and a content of paraffin-based components of 38% to 58% by weight, can be preferably used.

The TDAE oil excellently improves the low temperature characteristics of the tire containing the TDAE oil and the fuel consumption performance, and has advantageous characteristics also for environmental factors such as the potential for carcinogenesis of PAH's.

Regarding the plant oils and fats, any one selected from the group consisting of castor oil, cotton seed oil, linseed oil, canola oil, soybean oil, palm oil, coconut oil, peanut oil, pine oil, pine tar, tall oil, corn oil, rice bran oil, safflower oil, sesame oil, olive oil, sunflower oil, palm kernel oil, camellia oil, jojoba oil, macadamia nut oil, safflower oil, tung oil, and combinations thereof can be used.

It is preferable to use the softening agent in ana mount of 0 to 150 parts by weight relative to 100 parts by weight of the raw material rubber, from the viewpoint of improving processability of the raw material rubber.

The anti-aging agent is an additive used for stopping the chain reaction by which a tire is spontaneously oxidized by oxygen. Regarding the anti-aging agent, any one selected from the group consisting of amine-based agents, phenol-based agents, quinoline-based agents, imidazole-based agents, carbamic acid metal salts, waxes, and combinations thereof can be appropriately selected and used.

Regarding the amine-based anti-aging agent, any one selected from the group consisting of N-phenyl-N'-(1,3-dimethyl)-p-phenylenediamine, N-(1,3-dimethylbutyl)-N'-phenyl-p-phenylenediamine, N-phenyl-N'-isopropyl-p-phenylenediamine, N,N'-diphenyl-p-phenylenediamine, N,N'-diaryl-p-phenylenediamine, N-phenyl-N'-cyclohexyl-p-phenylenediamine, N-phenyl-N'-octyl-p-phenylenediamine, and combinations thereof can be used. Regarding the phenol-based anti-aging agent, any one selected from the group consisting of phenolic compounds such as 2,2'-methylenebis(4-methyl-6-tert-butylphenol), 2,2'-isobutylidenebis(4,6-dimethylphenol), 2,6-di-t-butyl-p-cresol, and combinations thereof can be used. Regarding the quinoline-based anti-aging agent, 2,2,4-trimethyl-1,2-dihydroquinoline and derivatives thereof can be used, and specifically, any one selected from the group consisting of 6-ethoxy-2,2,4-trimethyl-1,2-dihydroquinoline, 6-anilino-2,2,4-trimethyl-1,2-dihydroquinoline, 6-dodecyl-2,2,4-timethyl-1,2-dihydroquinoline, and combinations thereof can be used. Regarding the wax, waxy hydrocarbons can be preferably used.

Regarding the anti-aging agent, when conditions other than the anti-aging effect, such as that the anti-aging agent should have high solubility in rubber and low volatility, should be inactive to rubber, and should not inhibit vulcanization, are taken into consideration, the anti-aging agent may be incorporated in an amount of 1 to 10 parts by weight relative to 100 parts by weight of the raw material rubber.

The sidewall insert rubber composition for run-flat tire can be produced through a conventional two-stage continuous production process. That is, the sidewall insert rubber composition can be produced in an appropriate mixing machine using a first step of thermomechanically treating or kneading the raw materials at a maximum temperature of 110°C to 190°C, preferably at a high temperature of 130°C to 180°C; and a second step of mechanically treating the resultant typically at a low temperature of lower than 110°C, for example, 40°C to 100°C, during the finishing stage of mixing the crosslinked system. However, the present invention is not intended to be limited to this.

The sidewall insert rubber composition for run-flat tire is not limited to the sidewall insert, and may be incorporated into various rubber constituent elements that constitute a tire. Examples of the rubber constituent elements include tread (tread cap and tread base), side wall, apex, chafer, wire coat, and inner liner.

A tire according to another aspect of the present invention is produced using the sidewall insert rubber composition for run-flat tire described above. In regard to the method for producing a tire using the sidewall insert rubber composition for run-flat tire, any method that is conventionally used in the production of a tire can be applied, and thus detailed explanations thereon will not be repeated herein.

The tire may be a tire for passenger cars, a tire for racing cars, an airplane tire, a tire for agricultural machines, a tire for off-the-road driving, a truck tire, or a bus tire. Also, the tire may be a radial tire or a bias tire, and it is preferable that the tire is a radial tire.

The sidewall insert rubber composition for run-flat tire of the present invention has excellent processability in an unvulcanized state, and produces a run-flat tire having excellent resistance to heat generation, resistance to fatigue and resistance to cracking, and also having excellent run-flat performance and low fuel consumption performance.

### EXAMPLES

Hereinafter, Examples of the present invention will be described in detail so that a person having ordinary skill in the art to which the present invention is pertained, can easily carry out the invention. However, the present invention can be realized in various different forms, and is not intended to be limited to the Examples described herein.

### [Production Example: Production of rubber composition]

Sidewall insert rubber compositions for run-flat tire according to the following Examples and Comparative Examples were produced using the compositions described in the following Table 1. The production of the rubber compositions was carried out according to a conventional method for producing a rubber composition.

**[Table 1]**

| | Comparative Example 1 | Comparative Example 2 | Example 1 | Example 2 | Example 3 | Example 4 | Comparative Example 3 |
|---|---|---|---|---|---|---|---|
| Natural rubber | 50 | 50 | 50 | 50 | 50 | 50 | 50 |
| BR 1⁽¹⁾ | 50 | - | - | - | - | - | - |
| BR 2⁽²⁾ | | 50 | 50 | 50 | 50 | 50 | 50 |
| Carbon black⁽³⁾ | 50 | 50 | 50 | 50 | 50 | 50 | 60 |
| Reinforcing resin⁽⁴⁾ | - | - | 3 | 5 | 3 | 3 | - |
| Methylene donor⁽⁵⁾ | - | - | 0.3 | 0.5 | 0.6 | 1 | - |
| Zinc oxide | 5 | 5 | 5 | 5 | 5 | 5 | 5 |
| Stearic acid | 2 | 2 | 2 | 2 | 2 | 2 | 2 |
| Sulfur | 3 | 3 | 3 | 3 | 3 | 3 | 3 |
| Accelerator⁽⁶⁾ | 2 | 2 | 2 | 2 | 2 | 2 | 2 |
| Deterioration preventing agent⁽⁷⁾ | 1 | 1 | 1 | 1 | 1 | 1 | 1 |

| | | | | | | | |
|---|---|---|---|---|---|---|---|
| (unit: parts by weight) (1) BR 1: Polybutadiene including syndiotactic 1,2-polybutadiene (2) BR 2: High-cis butadiene rubber having a content of cis-1,4-butadiene of 97% by weight or more and a weight average molecular weight (Mw) of 7.0×10⁵ to 7.5×10⁵ g/mol (3) Carbon black: GPF (having an iodine absorption specific surface area of 20 to 50 g/kg and an OAN of 85 to 120 cm³/100 g) (4) Reinforcing resin: Novolac resin (5) Methylene donor: Hexamethylenetetramine (6) Accelerator: IBBS (7) Deterioration preventing agent: Vulcuren KA9188 | | | | | | | |

### [Experimental Example: Measurement of properties of rubber compositions thus produced]

Rubber specimens produced in the above-described Examples and Comparative Examples were used to measure the properties, and the results are presented in the following Table 2.

**[Table 2]**

| | Comparative Example 1 | Comparative Example 2 | Example 1 | Example 2 | Example 3 | Example 4 | Comparative Example 3 |
|---|---|---|---|---|---|---|---|
| Hardness (Shore A) | 73 | 69 | 73 | 78 | 75 | 76 | 72 |
| 100% Modulus (MPa) | 72 | 62 | 76 | 89 | 83 | 85 | 70 |
| Elongation (%) | 180 | 200 | 176 | 162 | 172 | 169 | 170 |
| Tensile strength (MPa) | 124 | 95 | 121 | 112 | 116 | 118 | 106 |
| 60°C tanδ | 0.08 | 0.45 | 0.05 | 0.057 | 0.053 | 0.056 | 0.06 |

- The hardness was measured using a Shore A hardness meter, and the 100% modulus, tensile strength and elongation were measured using an Instron tester according to the test methods of ASTM D412.
- Viscoelasticity was determined by measuring tan δ from 0% to 10% at a frequency of 10 Hz under 5% strain, using a dynamic mechanical thermal analysis (DMTA) analyzer.

The 60°C tan δ in the above Table 2 represents the rolling resistance characteristics, and a smaller value represents superior performance. Regarding the hardness and the 100% modulus, larger values represent superior rigidity and cracking resistance. Regarding the elongation and the tensile strength, larger values represent superior tensile characteristics.

According to Table 2, Examples used highly linear butadiene having a high cis-1,4 content, and used a novolac resin as the reinforcing resin, and hexamethylenetetramine as the methylene donor. Thus, it was found that the Examples exhibit enhanced rolling resistance performance and high rigidity, compared with Comparative Example 1 containing syndiotactic 1,2-polybutadiene, or Comparative Examples 2 and 3 that do not contain a novolac resin and hexamethylenetetramine.

Preferred embodiments of the present invention have been described in detail in the above, but the scope of rights of the present invention is not intended to be limited thereto, and various modifications and improvements made by those having ordinary skill in the art by utilizing the basic inventive concept of the present invention as defined in the following claims are also included in the scope of rights of the present invention.

## Claims

1. A sidewall insert rubber composition for run-flat tire, comprising:
100 parts by weight of raw material rubber including 30 to 60 parts by weight of natural rubber and 40 to 70 parts by weight of butadiene rubber;
40 to 70 parts by weight of carbon black;
3 to 10 parts by weight of a novolac resin; and
0.2 to 2 parts by weight of a methylene donor;
wherein the butadiene rubber is a high-cis butadiene rubber having a content of cis-1,4-butadiene of 97% by weight or more and a weight average molecular weight (Mw) of 7.0×10⁵ to 7.5×10⁵ g/mol;
wherein the methylene donor is hexamethylenetetramine; and
wherein the carbon black has an iodine absorption specific surface area of 20 to 50 g/kg and an oil absorption number (OAN) of 85 to 120 cm³/100 g.

2. A tire produced using the sidewall insert rubber composition for run-flat tire according to claim 1.

## Patentansprüche

1. Seitenwandeinsatzgummimischung für Runflat-Reifen umfassend:
100 Gewichtsanteile eines Gummi-Ausgangsmaterials enthaltend 30 bis 60 Gewichtsanteile Naturgummi und 40 bis 70 Gewichtsanteile Butadien-Kautschuk;
40 bis 70 Gewichtsteile Ruß;
3 bis 10 Gewichtsteile eines Novolak-Harzes; und
0,2 bis 2 Gewichtsanteile eines Methylen-Donators; wobei der Butadien-Kautschuk ein Hoch-Cis-Butadien-Kautschuk ist, der einen Cis-1,4-Butadienanteil von 97 Gew.-% oder mehr und ein mittleres Molekulargewicht (Mw) von 7,0 x 10⁵ bis 7,5 x 10⁵ g/mol aufweist;
wobei der Methylen-Donator Hexamethylentetramin ist und wobei der Ruß eine spezifische Jod-Absorptionsfläche von 20 - 50 g/kg und eine Öl-Absorptionsnummer (OAN) von 85 - 120 cm³/100g besitzt.

2. Reifen, hergestellt unter Verwendung der Seitenwandeinsatzgummimischung für Runflat-Reifen nach Anspruch 1.

## Revendications

1. Composition de caoutchouc pour insert de flanc d'un pneu à roulage à plat, comprenant :
100 parties en poids d'une matière première de caoutchouc comprenant de 30 à 60 parties en poids de caoutchouc naturel et de 40 à 70 parties en poids de caoutchouc butadiène ;
de 40 à 70 parties en poids de noir de carbone ;
de 3 à 10 parties en poids d'une résine novolaque ; et
de 0,2 à 2 parties en poids d'un donneur de méthylène ;
dans laquelle le caoutchouc butadiène est un caoutchouc butadiène à haute teneur en cis ayant une teneur en cis-1,4-butadiène égal ou supérieur à 97% en pois et une masse moléculaire moyenne en poids (Mw) comprise entre 7,0 x 10⁵ et 7,5 x 10⁵ g/mol ;
dans laquelle le donneur de méthylène est hexaméthylène tétramine ; et
dans lequel le noir de carbone a une surface spécifique d'adsorption d'iode comprise entre 20 et 50 g/kg et un indice d'absorption d'huile (OAN) compris entre 85 et 120 cm³/100 g.

2. Pneu produit avec la composition de caoutchouc pour insert de flanc d'un pneu à roulage à plat selon la revendication 1.
